# FASCICULE DE BREVET EUROPEEN

(11) **EP 3 380 221 B1**
(45) Date de publication et mention de la délivrance du brevet: **22.01.2025**
(21) Numéro de dépôt: 16805030.0
(22) Date de dépôt: 22.11.2016
(51) Int. Cl.: B01F 23/50, B01F 27/80, B01F 35/75, B01F 35/71

(54) **PROCEDE DE TRAITEMENT DE SEMENCES**
SAMENBEHANDLUNGSVERFAHREN
SEED TREATMENT METHOD

(30) Priorité: 24.11.2015 FR 1561306
(43) Date de publication de la demande: 03.10.2018
(73) Titulaire: SPECIALTY OPERATIONS FRANCE, 69003 Lyon (FR)
(72) Inventeur: DAVID, Chenglu, 75017 Paris (FR); FERLIN, Patrick, 75019 Paris (FR); LECHARTIER, Carole, 92700 Colombes (FR); PHELIPPEAU, Patrick, 78700 Conflans Sainte Honorine (FR)
(74) Mandataire: Cabinet Nony
(86) Numéro de dépôt international: PCT/EP2016/078420
(87) Numéro de publication internationale: WO 2017/089342

(56) Documents cités:
- EP-A2- 0 408 360
- EP-A2- 0 486 933
- GB-A- 2 025 200
- JP-A- 2004 123 846
- JP-A- 2013 163 170
- US-A- 4 251 952
- US-A- 4 955 723
- US-A- 4 955 723
- US-A1- 2014 269 153

## Description

### DOMAINE TECHNIQUE

La présente invention concerne le traitement de semences et plus particulièrement mais non exclusivement un procédé et une installation pour préparer un mélange destiné à traiter, notamment enrober, des graines.

### ARRIERE-PLAN

Dans le domaine de l'agriculture, il est connu de traiter les semences pour pouvoir les manipuler plus facilement, améliorer l'environnement dans lequel elles vont se développer ou leurs propriétés germinatives, ou pour les protéger, par exemple vis-à-vis des nuisibles, de la moisissure, des conditions climatiques ou contre leur détérioration au cours du vieillissement. Pour ce faire, différents procédés de traitement existent, comme le traitement de surface simple (en anglais "seed dressing"), le pelliculage ("seed coating") ou l'encapsulage des semences ("seed pelletizing").

Le pelliculage consiste en général à déposer à la surface des semences une fine pellicule de polymère dans laquelle sont incluses différentes substances agrochimiques. La forme et la dimension des semences au cours de ce procédé ne sont que peu modifiées.

L'encapsulage consiste en général à modifier la taille et la forme des semences par un apport important de matière inerte, par exemple pour faciliter l'utilisation de semoirs mécaniques classiques qui ont du mal à être utilisés avec des semences trop petites. Plusieurs substances phytosanitaires peuvent être ainsi localisées plus précisément dans les différentes strates de l'enrobage.

Dans la suite, on désignera par « enrobage » un « pelliculage » ou « en capsulage ».

Classiquement, les formulations de traitement utilisées sont :
- des formulations liquides comprenant typiquement un fongicide en dispersion dans l'eau, des pigments et des polymères liants (en anglais "binders"), ou
- des formulations en poudre, permettant d'accélérer le séchage, diminuer l'adhésivité et améliorer la fluence des graines.

Typiquement, les formulations liquides sont appliquées sur les semences par des procédés tels que la pulvérisation, la pulvérisation-séchage, le malaxage, le barattage ou tout autre moyen bien connu de l'homme du métier.

Dans le cas des formulations en poudre, l'adhésion de la formulation sur les semences se fait par ajout d'eau, comme cela est décrit dans la demande de brevet GB 2 025 200.

Plus précisément, la méthode la plus couramment employée consiste à prémélanger la poudre et l'eau de sorte à obtenir une dispersion, qui est elle-même ensuite appliquée sur les semences. Alternativement, on peut procéder comme suit : soit les semences sont mouillées et la poudre est ajoutée ensuite sur les semences, soit la poudre est mélangée avec les semences puis l'eau est ajoutée.

Certains composés de traitement restent cependant difficiles à appliquer sur les semences. C'est le cas, notamment, des composés hydratables développant une viscosité importante au contact de l'eau et que l'on souhaite utiliser dans une proportion massive significative. Typiquement, sur les semences de grande culture, la proportion visée est comprise entre 0,1% et 1%, cette proportion correspondant à la masse de la formulation de traitement en poids sec, après élimination de l'eau, sur la masse de semence.

Dans le cas d'une formulation liquide, ces composés hydratables engendrent une viscosité trop élevée pour pouvoir manipuler et appliquer la formulation dans des conditions usuelles. L'option consistant à diluer la formulation (pour diminuer la concentration du composé et, ainsi, limiter la viscosité de la formulation) n'est, par ailleurs, pas satisfaisante. En effet, cette option conduirait à introduire une quantité d'eau importante par rapport à la masse de semences traitées. Or, la quantité d'eau est bornée par une valeur maximale acceptable par les semences en l'absence de séchage, ce qui est la règle pour les semences de grandes cultures. Au-delà de ce seuil acceptable, la semence peut germer au stockage spontanément, perdre rapidement sa capacité germinative après quelques temps de stockage, ou l'eau peut provoquer un gonflement de la graine qui ne reprend sa forme initiale que très lentement, ces variations de volume pouvant entrainer un effritement, voire un craquellement du film d'encapsulage ou de pelliculage, ou encore provoquer des agglomérats de semences traitées. L'option consistant à diluer la formulation ne serait donc satisfaisante qu'à la condition d'utiliser les semences juste après le traitement, ce qui n'est pas envisageable pour les semences de grande culture du fait que ces semences représentent des volumes importants.

Dans le cas d'une formulation en poudre, on a pu constater que les composés hydratables précités engendraient des problèmes d'inhomogénéité de traitement des semences, et des résidus engendrant à leur tour des problèmes de perte de matière et d'encrassement des appareils de mélange.

Diverses installations permettant la dispersion d'une poudre dans un milieu liquide ont pu être proposées.

US 2014/0269153 décrit une installation industrielle pour effectuer un mélange dans lequel une poudre est introduite par dépression dans une cuve de mélange.

EP 1 165 874 divulgue ainsi une installation dans laquelle une poudre est introduite dans une cuve de mélange via un tube plongeur.Une telle installation ne convient toutefois pas à la préparation d'une composition à base de composé(s) hydratable(s), compte-tenu de son comportement rhéologique. En particulier, l'utilisation de composés hydratables poserait un problème d'encrassement rapide du tube plongeur et de dépôt sur les parois de la cuve de résidus difficiles à enlever.

Les publications CN 202105636, CN 203329707, CN104607091 et CN201880505 décrivent d'autres installations également inadaptées à la préparation de façon automatique de plusieurs lots successifs de mélange, avec une variabilité relativement faible de la formulation du mélange entre les lots.

Il existe donc un besoin pour un nouveau procédé de traitement permettant d'appliquer de façon automatisée et cyclique sur des semences des substances pulvérulentes, notamment des composés hydratables, dans une proportion significative.

Il existe également un besoin pour une installation pour la mise en œuvre d'un tel procédé à l'échelle industrielle et à un coût raisonnable.

Il existe également un besoin pour une installation permettant de mettre en œuvre de façon combinée, au moyen d'une même et seule installation, différents types de traitements de semences.

Il existe également un besoin pour un nouveau procédé de traitement de semences, et une installation pour la mise en œuvre d'un tel procédé, pouvant être intégré à une chaîne de traitements de semences industrielle sans en impacter de façon significative l'encombrement et/ou la cadence (typiquement d'au moins 20kg de semences traitées par minute, notamment d'au moins 100kg de semences traitées par minute, notamment d'au moins 150kg de semences traitées par minute, notamment d'au moins 200 kg de semences traitées par minutes, voire d'au moins 300 kg de semences traitées par minute).

### PRESENTATION GENERALE

L'invention répond à tout ou partie des besoins précités grâce à un procédé de traitement de semences, à l'aide d'une composition obtenue extemporanément par mélange d'au moins une substance pulvérulente et d'un milieu aqueux, comportant les étapes de la revendication 1.

L'invention permet un fonctionnement automatisé sur plusieurs cycles de traitement, en limitant avantageusement les problèmes d'encrassement de la cuve liés au comportement rhéologique de la dispersion, la substance pulvérulente étant un composé hydratable.

L'injection de la substance pulvérulente au sein du liquide dans la cuve grâce à une dépression s'avère limiter l'émission de poussières et le dépôt de la substance pulvérulente sur les parois émergées de la cuve, tout en assurant une bonne dispersion de la substance pulvérulente au sein du liquide.

L'invention est ainsi particulièrement bien adaptée à une substance pulvérulente étant un composé hydratable.

L'invention convient notamment à un mélange qui présente une viscosité qui augmente de façon significative avec le temps.

Le volume du mélange dans la cuve est de préférence inférieur ou égal à 151, mieux à 101, étant de préférence d'au moins 0,1L, notamment d'au moins 0,5L. Un tel volume est bien adapté au traitement de semences, et permet d'utiliser une cuve de fabrication standard, sans renforcement particulier de sa résistance mécanique, ce qui ne serait pas le cas avec une cuve de taille plus importante, compte-tenu des niveaux de pression ou de dépression rencontrés. Il est à noter que de façon surprenante, malgré ce volume relativement faible, l'injection de la substance pulvérulente peut se faire sans encrasser la cuve ni provoquer une forte émission de poussières, malgré plusieurs cycles répétés sans intervention manuelle à l'intérieur de la cuve du fait de l'automatisation.

Dans des exemples de mise en œuvre de l'invention, le procédé est dépourvu d'étape de séchage du mélange entre l'étape de formation du mélange et l'étape d'application de ce dernier sur les semences. Ainsi, le contenu de la cuve appliqué sur les semences est autre qu'une poudre sèche, étant notamment sous forme d'une dispersion aqueuse de la matière pulvérulente dans le milieu aqueux.

L'évacuation du contenu de la cuve peut s'effectuer en une ou plusieurs chasses de gaz comprimé, de préférence en une seule chasse de gaz comprimé.

La première chasse peut être opérée au plus tard 60s après la fin de l'introduction de la substance pulvérulente dans la cuve, mieux au plus tard 30 s après celle-ci, et la dernière chasse peut être opérée, le cas échéant, au plus tard 30 min après la fin de l'introduction de la substance pulvérulente dans la cuve, mieux au plus tard 15 min après celle-ci, encore mieux au plus tard 5 min après celle-ci et encore mieux au plus tard 75s après celle-ci, voire au plus tard 60s après celle-ci.

Lorsque l'évacuation du contenu de la cuve s'effectue en une seule chasse de gaz comprimé, celle-ci est opérée de préférence au plus tard 5 min après la fin de l'introduction de la substance pulvérulente dans la cuve, mieux au plus tard 2 min, encore mieux au plus tard 75s après celle-ci, de préférence au plus tard 45s après celle-ci, de préférence au plus tard 30s après celle-ci, par exemple au plus tard 20s après celle-ci, voire au plus tard 10s après celle-ci.

De telles durées entre la fin de l'introduction de la substance pulvérulente et l'évacuation de la cuve permettent de pouvoir traiter une grande quantité de semences en peu de temps. De plus, dans le cas de l'application d'une dispersion aqueuse présentant une évolution rhéologique au cours du temps, notamment devenant de plus en plus visqueuse au cours du temps, une telle durée entre la fin de l'introduction de la substance pulvérulente et l'évacuation de la cuve permet d'avoir une dispersion aqueuse d'une viscosité adéquate lors de son application sur les semences.

De préférence, l'application du contenu de la cuve sur les semences s'effectue immédiatement après l'évacuation du contenu de la cuve, de préférence moins de 5 min après l'évacuation, mieux moins de 1 min après celle-ci, encore mieux, moins de 30 s après celle-ci.

De préférence, le procédé est dépourvu d'une étape de stockage du contenu de la cuve entre la vidange de cette dernière et l'application du contenu de la cuve sur les semences.

L'injection de la substance pulvérulente dans la cuve s'effectue à travers un piquage de diamètre intérieur inférieur ou égal à 17 mm, par exemple compris entre 3 et 17 mm, mieux compris entre 5 et 15 mm. Un tel diamètre permet de limiter le volume mort et de réduire le risque d'encrassement.

Le mélange peut être soumis à une agitation selon au moins deux régimes d'agitation différents.

En particulier, le mélange peut être soumis à une agitation selon un régime plus faible (typiquement d'un facteur 0,05 à 0,9, voire nul) au moment de la vidange au moins partielle, par rapport à la séquence allant de la fin de l'introduction de la substance pulvérulente au début de la vidange. On réduit ainsi le risque de formation de poches gazeuses dans la conduite d'évacuation. On diminue également ainsi la contrainte d'écoulement au niveau du piquage de la vidange.

Selon un mode de réalisation préféré, le régime d'agitation dans la cuve peut être identique à compter de la fin de l'introduction de la substance pulvérulente dans la cuve jusqu'au début de la vidange.

Selon ce mode de réalisation, le mélange peut être soumis à une agitation selon un régime plus faible, typiquement d'un facteur 0,05 à 0,9, voire nul, au moment de la vidange au moins partielle, par rapport à la séquence allant du début de l'introduction de la substance pulvérulente au début de la vidange.

Selon un autre mode de réalisation, le mélange peut être soumis à une agitation selon au moins deux régimes d'agitation différents non nuls à compter de l'introduction de la substance pulvérulente dans la cuve jusqu'au début de la vidange, dont un régime plus fort (typiquement d'un facteur 1,1 à 4) entre la fin de l'introduction de la substance pulvérulente et le début de la vidange, qu'au moment de l'introduction de la substance pulvérulente dans la cuve. On réduit ainsi le risque de projection de substance pulvérulente au-dessus du liquide dans la cuve lors de l'étape d'introduction de celle-ci.

A titre illustratif, le mélange peut être soumis à une agitation allant de 300 à 2000 tr/min, par exemple de 400 à 1000 tr/min entre le début de l'introduction de la substance pulvérulente et le début de la vidange, voire entre la fin de l'introduction de la substance pulvérulente et le début de la vidange.

Le milieu aqueux peut contenir au moins un actif phytosanitaire, celui-ci étant injecté dans une canalisation d'eau reliée à la cuve. Le milieu aqueux peut notamment contenir plusieurs actifs phytosanitaires injectés séparément par des piquages respectifs dans ladite canalisation. Une telle injection séparée facilite la traçabilité et la maintenance. Elle réduit également de façon significative l'encombrement à proximité immédiate de la cuve. L'invention rend possible l'injection séparée de ces différents actifs phytosanitaires dans la canalisation, leur introduction dans la cuve pouvant être par ailleurs réalisée soit de façon simultanée, soit de façon séquencée.

Cette canalisation peut comporter une ligne directe débouchant directement dans la cuve et au moins une dérivation débouchant dans celle-ci par l'intermédiaire d'au moins une tête de lavage, et au moins une vanne pour envoyer sélectivement l'eau chargée éventuellement d'au moins un actif phytosanitaire dans la cuve, soit via la ligne directe soit via la dérivation.

En particulier, l'eau peut être envoyée dans la cuve par la ligne directe lorsqu'elle est chargée du ou des actifs phytosanitaires. On évite ainsi de soumettre outre mesure la tête de lavage au(x) actif(s) phytosanitaire(s), ce qui diminue le risque de corrosion et évite également que la sédimentation éventuelle d'actif(s) phytosanitaire(s) ne conduise à un encrassement progressif de la tête de lavage..

De préférence, une certaine quantité d'eau est envoyée dans la cuve une fois celle-ci vidangée, cette eau circulant par la dérivation et la tête de lavage, et étant utilisée à la fois pour le rinçage de la cuve et dans la constitution du milieu aqueux du cycle de préparation suivant. On limite ainsi la quantité de déchets et le coût du traitement des effluents générés par l'installation, dans la mesure où l'eau de rinçage peut être réutilisée telle quelle dès le cycle de préparation suivant. L'expérience a montré que même en procédant de cette façon, la variabilité sur la formulation du mélange demeure dans des limites acceptables étant donné que la constitution de cette eau de rinçage est quasi constante d'un cycle à l'autre.

Le niveau minimum de dépression dans la cuve juste avant l'aspiration de la substance pulvérulente peut être compris entre -0,05 et -1 bar, notamment entre -0,1 et -0,8 bar, mieux entre -0,3 et -0,5 bar. Ce niveau minimum de dépression est de préférence maintenu dans la cuve pendant toute la durée de l'injection de la substance pulvérulente.

Le niveau de surpression dans la cuve pendant l'opération de vidange au moins partielle peut être compris entre 0,05 et 2 bar, notamment entre 0,1 bar et 1 bar. Par exemple, le niveau de surpression dans la cuve pendant l'opération de vidange au moins partielle peut être inférieur ou égal à 0,5 bar, par exemple compris entre 0,1 et 0,5 bar.

Le procédé selon l'invention peut comporter la mise à pression atmosphérique de la cuve à l'aide d'un évent durant l'injection d'eau, éventuellement chargée d'actif(s), dans la cuve.

Le contenu de la cuve peut être immédiatement vidangé de façon automatique vers un récipient dédié en cas d'arrêt d'urgence, cette vidange d'urgence étant notamment déclenchée par appui manuel sur un bouton correspondant.

Le procédé selon l'invention est avantageusement mis en œuvre à l'aide d'au moins deux cuves selon des cycles déphasés entre eux, ces cuves étant de préférence reliées à la même source d'eau et d'actif(s) et à la même source de substance pulvérulente. Selon ce mode de réalisation, chaque cuve peut être reliée au même dispositif de traitement de semences ou, alternativement, à des dispositifs de traitement de semences distincts. En d'autres termes, la vidange de chaque cuve peut s'effectuer soit vers un même dispositif de traitement de semences, soit vers des dispositifs de traitement de semences distincts.

L'invention porte également sur une installation de préparation d'une composition de traitement de semences, pour la mise en œuvre du procédé selon l'invention tel que défini plus haut, comportant les caractéristiques de la revendication

Un même piquage peut être relié à plusieurs départs/arrivées différents. En variante, on utilise autant de piquages que d'arrivées/départs différents.

L'installation selon l'invention permet l'introduction de la substance pulvérulente sous le niveau du milieu aqueux dans la cuve, par le biais d'un piquage et d'une dépression créée dans la cuve par la source de vide.

Ce mode d'introduction de la substance pulvérulente est avantageux par rapport par exemple à un mode d'introduction par un tube plongeur, la substance pulvérulente étant un composé hydratable. On limite en effet ainsi les risques d'encrassement du moyen d'introduction de la substance pulvérulente.

De préférence, le piquage relié à l'arrivée de substance pulvérulente est en dessous du niveau du milieu aqueux lorsque ce dernier est au repos.

Le piquage relié à l'arrivée de substance pulvérulente peut néanmoins être au dessus du niveau du milieu aqueux lorsque ce dernier est au repos, lorsqu'il est prévu d'agiter le milieu aqueux pendant l'introduction de la substance pulvérulente, l'agitation faisant remonter le liquide sur les parois au-dessus du piquage relié à l'arrivée de substance pulvérulente de sorte que cette dernière est introduite au sein du milieu aqueux pendant l'agitation.

La source de vide peut être un dispositif comportant un venturi. L'installation selon l'invention peut comporter au moins une tête de lavage dans la cuve, reliée à la canalisation d'alimentation en eau de la cuve par l'intermédiaire d'une dérivation.

L'installation selon l'invention peut comporter une cuve ayant une contenance inférieure ou égale à 50 l, mieux à 20 l, encore mieux à 10 l, et une contenance supérieure ou égale à 0,1 l, mieux à 0,5 l, encore mieux à 11. La taille de la cuve peut être fixée en fonction de la quantité de semences à traiter par cycle et du nombre éventuel de chasses successives d'un gaz comprimé fixées pour vidanger totalement celle-ci.

De préférence l'installation de l'invention comporte des cuves coniques. On favorise ainsi l'écoulement du mélange lors de l'étape de vidange, ce qui permet de limiter les risques de dépôt de la dispersion contenant la substance pulvérulente notamment en fin de cycle.

L'installation selon l'invention peut comporter un automate de commande d'électrovannes, de moteurs et/ou de pompes permettant de commander de façon cyclique le remplissage, incluant le dosage, de la cuve en liquide, le dosage puis l'injection de la substance pulvérulente dans la cuve, la vidange de la cuve, et l'agitation dans celle-ci.

L'installation selon l'invention peut comporter deux cuves de réalisation du mélange, adaptées à être utilisées de façon déphasée, de manière à ce qu'un mélange puisse être en préparation dans l'une des cuves pendant qu'un mélange prêt à l'emploi est évacué d'une autre cuve.

Le dispositif de traitement des semences peut être directement relié à la sortie de vidange, notamment par un tube.

L'installation peut être dépourvue de zone de stockage telle qu'une cuve, du contenu de la cuve entre la vidange et le dispositif de traitement des semences.

Selon un procédé pas conforme à l'invention, l'installation peut encore être utilisée sans ajout de substance pulvérulente dans la cuve, pour réaliser un traitement des semences avec un ou plusieurs actifs. Ainsi, dans ce cas, le piquage d'arrivée de substance pulvérulente n'est pas utilisé, et l'électrovanne correspondante demeure fermée.

Le terme "semence" ne doit pas être compris avec un sens limitatif.

Ainsi, par "semence(s)", on désigne tout organe ou fragment d'un végétal que l'on met dans un milieu de culture (généralement de la terre) afin de permettre la formation d'un autre végétal de même nature. Il peut notamment s'agir d'une graine. Une semence peut être formée d'un tel organe ou fragment de végétal aggloméré avec d'autres substances ou de plusieurs organes ou fragments agglomérés entre eux. En outre, la semence à laquelle le procédé de traitement est appliqué peut avoir subi préalablement un autre traitement. En particulier, cette semence peut déjà avoir été traitée et, par exemple, être recouverte d'une ou plusieurs couches d'un revêtement. A l'inverse, cette semence peut être à l'état naturel.

L'expression "milieu aqueux" désigne un milieu comprenant comme solvant de l'eau, et "dispersion", un système hétérogène dans lequel une matière finement divisée, ici la matière pulvérulente, est répartie dans une autre matière, ici le milieu aqueux.

Par "composé hydratable" on désigne un composé, par exemple un polymère, qui, lorsqu'il est mis en dispersion dans de l'eau distillée à 25°C, sous agitation pendant 2 heures, à une concentration pouvant aller jusqu'à 5% en poids, par rapport au poids total de la dispersion, conduit en moins de 48h sous légère agitation, par hydratation, à une formulation présentant une viscosité (mesurée par un Rheomat RM300 à 25°C, à un taux de cisaillement de 10s⁻¹) supérieure à 8000 cP. En ce sens, on considère que des formulations pour lesquelles aucune mesure de la viscosité n'est possible (cas, par exemple, des formulations totalement gélifiées) présentent une viscosité (mesurée par un Rheomat RM300 à 25°C, à un taux de cisaillement de 10s⁻¹) supérieure à 8000 cP.

Pour cette mesure, la valeur du pH de la dispersion peut être ajustée afin d'améliorer les conditions d'hydratation du composé hydratable. La valeur du pH peut ainsi varier typiquement de 3 à 12, notamment de 5 à 10, en fonction du composé hydratable considéré, les gammes de pH appropriées pour chaque type de composé hydratable étant connues de l'homme du métier.

Le composé hydratable est présent dans le mélange utilisé pour traiter les semences à une concentration maximum de 70 % en poids, par rapport au poids du mélange. Avantageusement, cette concentration est comprise entre 4,5 et 70% en poids, par exemple entre 5 et 65% en poids, mieux entre 7,5 et 65% en poids, notamment entre 10 et 60% en poids.

Selon l'invention, la mise en contact du mélange avec les semences est effectuée avant que la viscosité du mélange (mesurée à 25°C à un taux de cisaillement de 10s⁻¹ par un Rheomat RM300) n'atteigne une valeur maximum. Cette valeur maximum peut être supérieure ou égale à 10000 cP (centipoises), soit 10000 mPa·s. (milli pasca·secondes), notamment supérieure ou égale à 50000 cP , soit 50000 mPa·s. L'étape de mise en contact peut ainsi être effectuée avant que la viscosité du mélange (mesurée à 25°C à un taux de cisaillement de 10s⁻¹ par un Rheomat RM300) n'atteigne une valeur maximum de 50000 mPa·s.

Selon l'invention, le composé hydratable est choisi parmi les composés suivants: une cellulose ou un de ses dérivés, par exemple hydroxycellulose, alkylcellulose, tel que méthylcellulose, hydroxyalkylcellulose tel que hydroxyéthylcellulose, ou hydroxypropylcellulose, hydroxypropylméthylcellulose, carboxyalkylcellulose, tel que carboxyméthylhydroxyéthylcellulose, carboxyméthylcellulose sodique, des polymères synthétiques tels que polyvinylpyridine, polyvinylpyrrolidone, polyéthylène glycol, oxyde de polyéthylène, polyamide, polyacrylamide, acide polyméthacrylique, alcool polyvinylique, polyglycérol, polytétrahydrofuranne, acide polyacrylique, polyacrylate, l'acide alginique et ses dérivés, tel que l'alginate, la pectine, les galactomannanes et leurs dérivés, tel que la gomme de guar, la gomme de guar hydroxypropylée, le carboxyméthyl-guar, le carboxyméthylhydroxypropyl-guar, les guars cationiques, gélatine, l'amidon et ses dérivés, tel que amidon cationique, amidon de maïs, amidon de blé, amidon de riz, amidon de pomme de terre, tapioca, maïs cireux, sorgho, sorgho cireux, dextrine, chitine, chitosan, gomme de xanthane, gomme de carraghénane, gomme karaya, un dérivé de l'un quelconque des composés précités, ou une combinaison de ces composés.

Selon un mode de réalisation, le composé hydratable est choisi parmi les celluloses et leurs dérivés.

Selon un autre mode de réalisation, le composé hydratable est choisi parmi les galactomannanes et leurs dérivés.

Selon un autre mode de réalisation, le composé hydratable est choisi parmi les polyacrylamides et leurs dérivés.

Selon un autre mode de réalisation, le composé hydratable est choisi parmi l'amidon et ses dérivés.

Selon un autre mode de réalisation, le composé hydratable est choisi parmi la gomme de xanthane et ses dérivés.

Le composé hydratable est par exemple un agropolymère d'origine naturelle commercialisé sous la marque AgRHO WR 30 ou AgRHO GSB 30 par la société SOLVAY.

On notera que le mélange peut avantageusement comprendre d'autres composés que le composé hydratable comme, par exemple, des pesticides, des fongicides, des herbicides, des molluscides, des bactéricides, des bactériostatiques, des produits à effet répulsif, des nutriments, des engrais, des stabilisateurs de croissance, des latexes (par exemple choisis parmi des polymères de type acétates de vinyle, polyuréthanes, styrène butadiène ou acryliques, éventuellement sous la forme de structures cœur/écorce (ou « core-shell »)), des tensioactifs, des antioxydants, des plastifiants, des colorants, des charges (par exemple une poudre de fluence (ou poudre siccative) de type silice (notamment silices précipitées ou pyrogénées), kaolin ou talc), des additifs biologiques (par exemple des inoculants du type bactéries ou champignons (notamment mycorhiziens)) ou un mélange de ceux-ci. Ces composés additionnels peuvent être ajoutés dans des quantités classiquement utilisées par l'homme du métier. A titre exemple, les latexes peuvent être typiquement introduits en des teneurs allant de 2 à 60 g (en extrait sec), notamment de 3 à 30 g (en extrait sec) par quintal de semence à traiter.

L'invention permet d'obtenir une bonne répartition de la dispersion réalisée lors de l'opération de mélange, sur les semences. Ce procédé est utilisable pour l'enrobage de semences et, notamment, le pelliculage de graines.

Lorsque la dispersion recouvre une semence, elle a une influence positive sur le développement de cette semence. Il semble que la dispersion permette de maintenir la semence qu'elle recouvre dans un environnement humide, favorable au développement de la semence. Cette influence positive n'est toutefois constatée que si la concentration de composé hydratable dans la dispersion est assez importante et, en particulier, dépasse la concentration minimum précitée.

Une concentration importante de composé hydratable a cependant pour inconvénient d'augmenter la viscosité de la dispersion. En pratique, après ajout du composé hydratable dans le milieu aqueux, la viscosité de la dispersion augmente très rapidement. Le fait de mettre en contact le composé hydratable et les semences avant que la viscosité de la dispersion n'atteigne la valeur maximum précitée et/ou dans un certain laps de temps, permet de limiter, voire d'éviter, la formation d'agrégats. De tels agrégats sont indésirables car la quantité de dispersion agglutinée en agrégats est inutile au traitement des semences et constitue une perte. Inversement, s'il y a peu ou s'il n'y a pas d'agrégats, on obtient un traitement plus homogène: la dispersion est mieux répartie sur les semences et chaque semence est mieux recouverte par la dispersion. En limitant ou en évitant la formation d'agrégats dans l'invention, on diminue le risque d'encrassement de la cuve et du bol de mélange du dispositif de traitement de semences, par exemple de l'enrobeuse, dans lequel la dispersion est mélangée aux semences.

Selon un mode de réalisation, la masse de mélange mise en contact avec les semences peut être comprise entre 0,5 et 10% de la masse des semences.

Dans certains modes de réalisation, la masse de mélange mise en contact avec les semences est supérieure ou égale à 0,5% de la masse des semences. En-deçà de cette valeur minimum de 0,5%, la quantité de mélange par semence et, donc, l'effet du mélange sur les semences peut ne pas être suffisant. Typiquement, la masse de mélange mise en contact avec les semences peut être supérieure ou égale à 0,75% de la masse des semences, notamment supérieure ou égale à 1% de la masse des semences.

Par ailleurs, la masse de mélange mise en contact avec les semences est typiquement inférieure ou égale à 10% de la masse des semences, notamment inférieure ou égale à 8%, en particulier inférieure ou égale à 6%. Au-delà de cette valeur maximum, un effet de saturation peut être constaté. En d'autres termes, la masse de mélange en excès n'a pas ou peu d'effet et constitue une perte. Egalement, au-delà d'un rapport de 10% entre la masse du mélange et la masse de semence, notamment au-delà de 8%, en particulier au-delà de 6%, il existe un risque que la quantité d'eau dans le mélange dépasse le seuil acceptable par la semence. Au-delà de ce seuil acceptable, la semence peut germer au stockage spontanément, ou bien perdre rapidement sa capacité germinative après quelques temps de stockage.

Avantageusement, la mise en œuvre du procédé de traitement de l'invention ne provoque pas une hydratation excessive des semences. En outre, la mise en œuvre du procédé de traitement de l'invention ne modifie pas le pouvoir germinatif des semences.

De préférence, l'hydratation résultant de l'application du contenu de la cuve sur les semences est suffisamment faible pour que les semences traitées ne puissent ni s'agglomérer, ni germer pendant leur stockage.

Les rapports massiques minimaux et maximaux entre la masse du mélange et la masse de semence peuvent varier entre les gammes précitées en fonction d'une part de la nature de la semence et d'autre part de la formulation du mélange, et notamment la nature du composé hydratable.

Outre les caractéristiques qui viennent d'être mentionnées plus haut, le procédé proposé peut présenter une ou plusieurs des caractéristiques parmi les suivantes, considérées individuellement ou selon des combinaisons techniquement possibles:
Lors de sa mise en contact avec les semences, le composé hydratable doit déjà être au moins partiellement hydraté. Cette hydratation partielle permet d'améliorer sa capacité d'adhésion sur la semence. Avantageusement, le procédé de l'invention ne nécessite pas l'introduction de solutions adhésives additionnelles pour assurer l'adhésion du composé hydratable sur la semence.

Comme indiqué précédemment, la concentration du composé hydratable est de préférence comprise entre 4,5 et 70% en poids, en particulier entre 5 et 65% en poids, par rapport au poids du mélange. Cette concentration peut être notamment comprise entre 10 et 45% en poids, en particulier entre 15 et 35% en poids. Ces plages de concentration permettent d'obtenir un bon compromis, pour la plupart des composés hydratables, entre la cinétique de montée en viscosité observée et la quantité de composé et d'eau dans la dispersion.

Optionnellement, une étape de séchage peut être mise en œuvre à l'issue de la mise en contact des semences avec le mélange pour réduire la quantité d'eau apportée par le mélange. Ce séchage peut se faire par exemple par chauffage à une température modérée, par exemple de 20 à 40°C, pendant quelques minutes à quelques heures, de manière que le gain en humidité des semences résultant du procédé de l'invention n'excède pas 3% en poids environ, de préférence 2% en poids environ.

Avantageusement, le procédé de l'invention ne comprend toutefois pas d'étape additionnelle de séchage.

Les semences peuvent être traitées par fournées ou "batchs" allant de 1 à 500 kg, notamment de 10 à 350 kg, notamment de 20 à 300 kg, et un cycle de traitement d'une fournée dans le dispositif de traitement de semences peut durer moins de 1 min. En outre, le procédé proposé peut être intégré à une chaîne de traitement de semences. En d'autres termes, ce procédé peut être mise en œuvre sur des semences antérieurement ou postérieurement à une ou plusieurs autres étapes de traitement de ces semences.

L'invention concerne également les semences traitées, en particulier les semences enrobées, obtenues selon le procédé décrit précédemment.

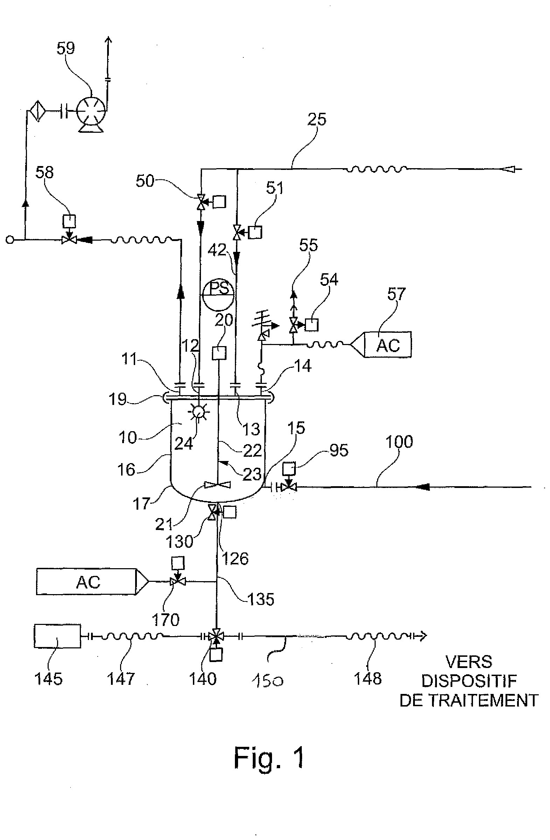

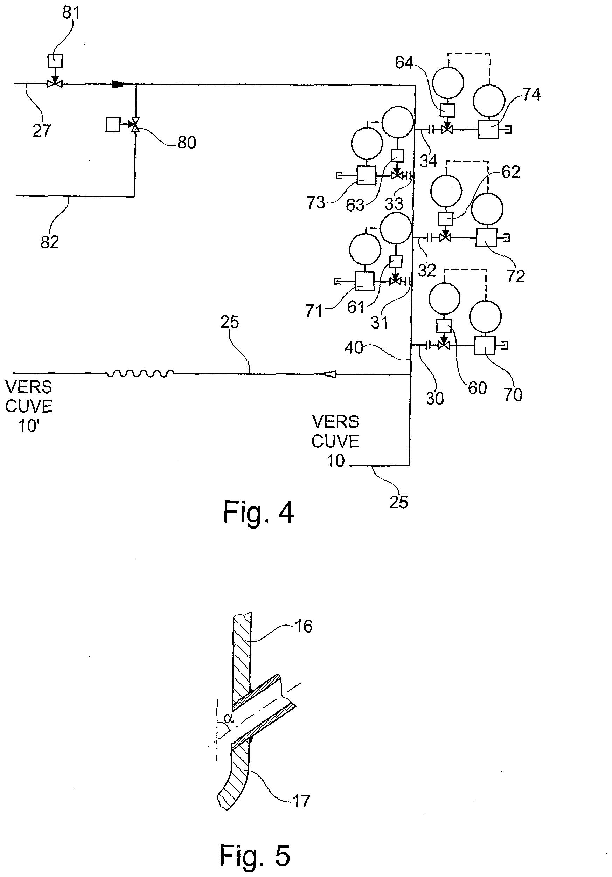

Un exemple non limitatif de mise en œuvre de l'invention va maintenant être décrit, en référence au dessin annexé, sur lequel les figures 1 à 4 représentent une installation de traitement selon l'invention, et la figure 5 un détail de réalisation d'une variante de piquage d'alimentation en substance pulvérulente.

### DESCRIPTION DETAILLEE

Le procédé selon l'invention peut être mis en œuvre à l'aide d'une installation telle que représentée schématiquement sur les figures 1 à 4.

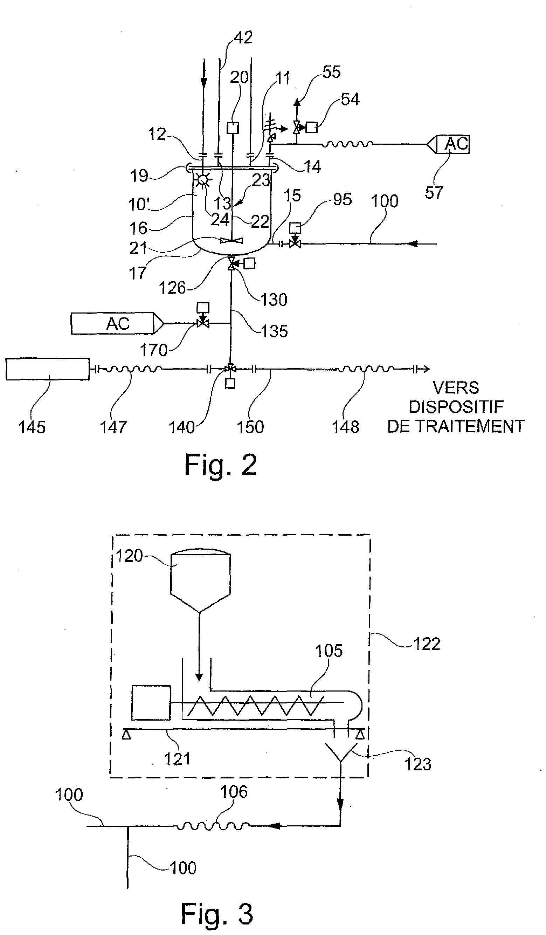

Cette installation comporte au moins une cuve de préparation 10, et mieux, comme illustré sur les figures 1 et 2, deux cuves 10 et 10'.

Chaque cuve 10 ou 10'a de préférence une contenance inférieure ou égale à 50 l, mieux à 20 l, encore mieux à 10 1, et une contenance supérieure ou égale à 0,1 l, mieux à 0,5 l, encore mieux à 11.

Chaque cuve 10 ou 10' présente divers piquages 11 à 14 en partie supérieure, et un piquage 15 sur sa paroi latérale.

Dans l'exemple considéré, chaque cuve 10 et 10' est par exemple réalisée en acier inoxydable pouvant comporter par exemple un revêtement interne de type Téflon et comporte un corps cylindrique 16 fermé en partie inférieure par une paroi de fond 17, conique et en partie supérieure par un couvercle 19.

Un dispositif d'agitation 23 est associé à chaque cuve 10 et 10', ce dispositif comportant un arbre 22 entrainé en rotation sur lui-même par un moteur 20. Un ou plusieurs organes de mélange 21, identiques ou différents, sont montés sur l'arbre 22 de façon à être entrainé en rotation par celui-ci.

Le ou les organes de mélange 21 peuvent être notamment choisis parmi les défloculeurs ou agitateurs de type Intermig.

Le piquage 12 alimente au moins une buse de projection d'eau de rinçage à 60-360° dans la cuve. Dans l'exemple considéré, le piquage 12 alimente une boule de pulvérisation rotative 24.

Le piquage 12 est relié par l'intermédiaire d'une électrovanne 50 à une canalisation 25 alimentée par un réseau d'eau 27, par exemple un réseau d'eau de ville, représenté à la figure 4.

Comme visible sur cette figure 4, les canalisations 25 reliées aux piquages 12 des deux cuves 10 et 10' se rejoignent en aval d'un tronçon 40 supportant divers piquages 30 à 34 d'alimentation en actifs, ces piquages étant par exemple disposés de façon rapprochée selon un montage dit en « clarinette ».

En revenant aux figures 1 et 2, on voit que le piquage 13 de chaque cuve 10 ou 10' est raccordé, par l'intermédiaire d'une dérivation 42 comportant une électrovanne 51, à la canalisation 25 correspondante, en amont de l'électrovanne 50 et en aval du tronçon 40.

Chaque piquage 14 est relié d'une part, par l'intermédiaire d'une électrovanne 54 à un évent 55, et d'autre part à une source d'air comprimé 57, par l'intermédiaire d'une électrovanne non représentée. Les piquages 11 des cuves 10 et 10' sont reliés, chacun par l'intermédiaire d'une électrovanne 58, à une source de vide 59, notamment comportant un venturi.

Selon un mode de réalisation, chaque piquage 14 peut être relié à la fois à un évent 55 par l'intermédiaire d'une électrovanne 54, à une source d'air comprimé 57 par l'intermédiaire d'une électrovanne non représentée et à une source de vide 59, notamment comportant un venturi, par l'intermédiaire d'une électrovanne 58. Un tel mode de réalisation permet notamment de réduire l'encombrement de l'installation.

Les piquages 30 à 34 du tronçon 40 sont reliés par l'intermédiaire d'électrovannes respectives 60 à 64 à des sources d'actifs pouvant être présents dans le mélange final.

Les piquages 30 à 34 peuvent être alimentés par des pompes doseuses à travers des débitmètres respectifs 70 à 74 permettant de connaître précisément la quantité d'actif distribuée.

Alternativement, les débitmètres 70 à 74 ne sont pas considérés comme faisant partie de l'installation selon l'invention, ceux-ci pouvant être en effet préexistants et liés aux pompes doseuses.

Le tronçon 40 peut être alimenté sélectivement par un réseau d'air comprimé 82 ou par le réseau d'eau de ville 27, par l'intermédiaire d'électrovannes 80 et 81 respectivement.

Chaque piquage 15 débouche dans la cuve correspondante 10 ou 10', sous le niveau nominal du liquide dans la cuve pendant l'opération de mélange. Cela signifie que chaque piquage 15 débouche dans la cuve correspondante 10 ou 10', sous le niveau du liquide dans la cuve, en tenant compte le cas échéant du vortex d'agitation. Ceci permet l'injection de la substance pulvérulente sous le niveau de liquide.

Le piquage 15 débouche par exemple, comme illustré, sensiblement à la jonction entre le corps cylindrique 16 de la cuve et sa paroi de fond 17.

Le piquage 15 peut être, comme illustré sur les figures 1 et 2, orienté sensiblement à l'horizontale ou, comme illustré à la figure 5, avec un angle α non nul avec l'horizontale. Le piquage 15 est par exemple orienté obliquement vers le bas, notamment à 45° par rapport à l'axe de la cuve. Dans ce cas, il débouchera de préférence sur le corps cylindrique 16. Le piquage 15 peut encore être orienté obliquement vers le haut. Dans ce cas, il débouchera de préférence sur la paroi de fond 17. De préférence, le piquage 15 est orienté obliquement vers le bas, notamment à 45° par rapport à l'axe de la cuve.

Le piquage est de préférence de diamètre intérieur inférieur ou égal à 17 mm, par exemple compris entre 3 et 17 mm, mieux compris entre 5 et 15 mm.

Chaque piquage 15 est relié via une électrovanne 95 à une conduite 100 d'introduction de la substance pulvérulente dans la cuve 10 ou 10'. Cette conduite 100 est raccordée, comme illustré à la figure 3, à un système de dosage de poudre 122 incluant une trémie 120 alimentant un système de transfert de poudre 105 type vis sans fin (par exemple bi-vis) ou plaque vibrante, le tout pouvant être monté sur un peson 121 afin de connaître par différence la quantité délivrée.

Selon un mode de réalisation, chaque cuve 10 ou 10' peut être également montée sur un peson (non représenté) afin de mesurer la quantité de liquide et/ou de substance pulvérulente qui y est introduite.

La conduite 100 est avantageusement constituée sur une partie de sa longueur au moins, par un tuyau souple 106, de préférence au moins partiellement transparent. Cela facilite la maintenance en cas de colmatage de la conduite 100.

De l'air comprimé peut être injecté dans le tronçon entre l'électrovanne 95 et le bac d'alimentation en poudre 123, par l'intermédiaire d'une électrovanne (non représentée), reliée à un réseau d'air comprimé (non représenté), pour purger la conduite 100 entre deux introductions de substance pulvérulente. De l'air comprimé peut également être injecté de manière continue dans le tronçon entre l'électrovanne 95 et la cuve correspondante 10 ou 10', pour limiter la remontée de liquide dans ce tronçon.

L'électrovanne 95 comporte de préférence un robinet du type boule à passage intégral, dont le conduit de sortie peut être fixé à faible distance sur la paroi de la cuve de façon à limiter le volume mort.

Dans le mode de réalisation selon lequel le piquage 15 est orienté sensiblement à l'horizontale, comme illustré sur les figures 1 et 2, l'électrovanne 95 peut être de type piston.

L'évacuation du contenu de chaque cuve 10 ou 10' se fait par l'intermédiaire d'un orifice de vidange 126 au point bas de la paroi de fond 17, cet orifice débouchant par l'intermédiaire d'une électrovanne 130 sur une conduite d'évacuation 135. L'électrovanne 130 est de préférence équipée d'un robinet de type boule.

La conduite 135 est reliée à une électrovanne trois voies 140, qui permet de raccorder sélectivement la conduite 135 soit à un récipient 145 de collecte de déchets, soit à une canalisation 150 d'alimentation d'un dispositif de traitement tel qu'une enrobeuse, non représenté sur le dessin. De préférence, comme illustré, le raccordement de l'électrovanne 140 au récipient 145 et au dispositif de traitement se fait par l'intermédiaire de tuyaux souples 147 et 148 respectivement, avantageusement en PTFE tressé inox, ce qui facilite l'évacuation de la dispersion. Une vanne anti-goutte (non représentée) peut être installée à l'extrémité du tuyau souple 148.

L'électrovanne trois voies 140 est de préférence équipée d'un robinet du type boule.

Un débitmètre non intrusif (non représenté) peut être disposé en aval de l'électrovanne trois voies 140 (c'est-à-dire entre le dispositif de traitement de semences et l'électrovanne trois voies 140) pour commander celle-ci afin d'interrompre la vidange de la cuve correspondante 10 ou 10' à la fin de chaque cycle d'alimentation du dispositif de traitement par l'une des cuves. Le débitmètre permet de connaître la quantité de mélange envoyée vers le dispositif de traitement. Ce débitmètre non intrusif n'est pas requis lorsque le contenu de la cuve est vidangé de façon totale à l'aide d'une unique chasse d'un gaz comprimé.

De l'air comprimé peut être injecté dans le tronçon entre les électrovannes 130 et 140 par l'intermédiaire d'une électrovanne 170, reliée au réseau d'air comprimé, pour purger les canalisations en fin d'utilisation.

L'arbre 22 du dispositif d'agitation peut être centré ou décentré par rapport à l'axe de la cuve.

Le fonctionnement de l'installation est le suivant. Les diverses électrovannes, pompes et moteurs sont commandées par un automate. Ce dernier automate reçoit des informations des divers capteurs de l'installation, notamment de pression, de débit et de poids.

Les cuves 10 et 10' sont de préférence utilisées en parallèle, de façon déphasée avec préparation en temps masqué du mélange dans l'une des cuves pendant que le mélange contenu dans l'autre cuve est envoyé vers le dispositif de traitement, et inversement. Dans la suite, le procédé est décrit pour la cuve 10 seulement, étant le même pour la cuve 10' de façon décalée dans le temps.

La cuve 10 est d'abord alimentée en actifs par le piquage 13, puis en eau par le piquage 12, jusqu'à ce que le niveau de liquide dans la cuve corresponde à une quantité prédéfinie fonction de la concentration finale à obtenir en matière pulvérulente dans le mélange. Ce niveau de liquide est suffisant pour que le piquage 15 soit immergé, le cas échéant en tenant compte du vortex d'agitation. Le volume du mélange est de préférence inférieur ou égal à 151, mieux à 101. Durant le remplissage, l'électrovanne 54 est ouverte, pour ouvrir la communication vers l'évent 55. L'arrivée d'eau par la tête de lavage 24 permet de nettoyer la partie émergée de la cuve des éventuels dépôts laissés par le cycle de préparation précédent.

Puis, les électrovannes 50, 51 et 54 étant fermées, l'électrovanne 58 est ouverte, pour mettre la cuve en dépression via le piquage 11. Une fois le niveau de dépression suffisant atteint, l'électrovanne 95 est ouverte pour permettre l'injection d'au moins une substance pulvérulente préalablement pesée et stockée dans le bac d'alimentation en poudre 123 sous le niveau de liquide, le cas échéant en tenant compte du vortex d'agitation de ce dernier pendant l'injection. Le niveau minimum de dépression dans la cuve juste avant l'aspiration de la substance pulvérulente est de préférence compris entre -0,05 et -1 bar, notamment entre -0,1 et -0,8 bar, mieux entre -0,3 et -0,5 bar. Un tel niveau de dépression permet une aspiration satisfaisante de la substance pulvérulente tout en évitant à celle-ci d'être aspirée trop violemment et de traverser le liquide vers le couvercle, ce qui provoquerait un encrassement des parois émergées et l'émission de poussières. Durant l'injection de substance pulvérulente, la dépression est maintenue à une valeur suffisante. Le mélange est alors soumis à une agitation selon un premier régime.

Ensuite, les électrovannes 58 et 95 sont fermées, et le mélange est soumis à un deuxième régime d'agitation. Ce deuxième régime est plus fort, typiquement d'un facteur 1,1 à 4, que le premier. Ce deuxième régime peut se prolonger jusqu'au début de la vidange de la cuve 10.

Une fois le mélange prêt à être envoyé vers le dispositif de traitement des semences, qui est par exemple une enrobeuse, de l'air comprimé est envoyé par le piquage 14 puis l'électrovanne 130 est ouverte.

Une fois la quantité prévue délivrée, l'électrovanne 130 est fermée.

Le mélange peut être soumis durant l'évacuation de la cuve 10 à une agitation selon un troisième régime plus faible, typiquement d'un facteur 0,05 à 0,9 (voire nul), que le deuxième.

La vidange totale du contenu de la cuve peut être réalisée soit à l'aide d'une unique chasse d'un gaz comprimé, soit à l'aide de plusieurs chasses consécutives d'un gaz comprimé. De préférence, la vidange totale du contenu de la cuve est réalisée à l'aide d'une unique chasse d'un gaz comprimé.

L'évacuation du contenu de la cuve peut ainsi se faire de façon discontinue, pour éviter un afflux trop grand de mélange dans le dispositif de traitement. Dans ce cas, l'électrovanne 130 est ouverte par intervalles.

La première chasse peut être opérée au plus tard 60s après la fin de l'introduction de la substance pulvérulente dans la cuve, mieux au plus tard 30 s après celle-ci, et la dernière chasse peut être opérée le cas échéant au plus tard 30 min après la fin de l'introduction de la substance pulvérulente dans la cuve, mieux au plus tard 15 min après celle-ci, encore mieux au plus tard 5 min après celle-ci et encore mieux au plus tard 75s après celle-ci, voire au plus tard 60s après celle-ci.

Le niveau de surpression dans la cuve 10 pendant l'opération de vidange au moins partielle est de préférence compris entre 0,05 et 2 bar, notamment entre 0,1 bar et 1 bar. Par exemple, le niveau de surpression dans la cuve pendant l'opération de vidange au moins partielle peut être inférieur ou égal à 0,5 bar, par exemple compris entre 0,1 et 0,5 bar.

Lorsque la vidange de la cuve est fractionnée, c'est-à-dire lorsqu'elle est réalisée via plusieurs chasses consécutives d'un gaz comprimé, les volumes vidangés lors de chaque chasse peuvent être identiques ou différents. Ces volumes sont déterminés en fonction de la quantité de semences à traiter.

Une fois la cuve 10 sensiblement vidangée, le cycle de préparation suivant peut être entamé, tandis que le mélange préparé dans la cuve 10' peut être envoyé vers le dispositif de traitement des semences.

Bien entendu, l'invention n'est pas limitée à l'exemple qui vient d'être décrit.

L'installation peut ne comporter qu'une seule cuve de préparation, ou en variante plus de deux cuves.

L'installation peut en outre être utilisée, le cas échéant, pour préparer un mélange sans substance pulvérulente, en introduisant un ou plusieurs actifs par les piquages 30 à 34, et en les mélangeant optionnellement à de l'eau envoyée dans la cuve 10 ou 10'.

Plusieurs systèmes de dosage de poudre peuvent être utilisés pour alimenter la cuve avec des substances pulvérulentes différentes. Ainsi, le mélange peut comporter des substances pulvérulentes différentes.

## Revendications

1. Procédé de traitement de semences, à l'aide d'une composition obtenue extemporanément par mélange d'au moins une substance pulvérulente et d'un milieu aqueux, comportant les étapes consistant à :
- réaliser de façon automatique et cyclique le mélange dans au moins une première cuve (10 ; 10') en y introduisant d'abord une partie au moins du milieu aqueux et ensuite la substance pulvérulente, cette dernière étant aspirée au sein du milieu aqueux dans la cuve grâce à une dépression créée dans la cuve, l'injection de la substance pulvérulente dans la cuve s'effectuant à travers un piquage de la cuve situé sous le niveau du milieu aqueux dans la cuve, le cas échéant en tenant compte du vortex d'agitation du milieu aqueux, et relié à une arrivée de substance pulvérulente, le piquage étant de diamètre intérieur inférieur ou égal à 17 mm, la substance pulvérulente étant un composé hydratable, le composé hydratable étant choisi parmi les composés suivants: une cellulose ou un de ses dérivés, par exemple hydroxycellulose, alkylcellulose, tel que méthylcellulose, hydroxyalkylcellulose tel que hydroxyéthylcellulose, ou hydroxypropylcellulose, hydroxypropylméthylcellulose, carboxyalkylcellulose, tel que carboxyméthylhydroxyéthylcellulose, carboxyméthylcellulose sodique, des polymères synthétiques tels que polyvinylpyridine, polyvinylpyrrolidone, polyéthylène glycol, oxyde de polyéthylène, polyamide, polyacrylamide, acide polyméthacrylique, alcool polyvinylique, polyglycérol, polytétrahydrofuranne, acide polyacrylique, polyacrylate, l'acide alginique et ses dérivés, tel que l'alginate, la pectine, les galactomannanes et leurs dérivés, tel que la gomme de guar, la gomme de guar hydroxypropylée, le carboxyméthyl-guar, le carboxyméthylhydroxypropyl-guar, les guars cationiques, gélatine, l'amidon et ses dérivés, tel que amidon cationique, amidon de maïs, amidon de blé, amidon de riz, amidon de pomme de terre, tapioca, maïs cireux, sorgho, sorgho cireux, dextrine, chitine, chitosan, gomme de xanthane, gomme de carraghénane, gomme karaya, un dérivé de l'un quelconque des composés précités, ou une combinaison de ces composés, le composé hydratable étant présent dans le mélange utilisé pour traiter les semences à une concentration comprise entre 4,5 et 70% en poids,
- vidanger au moins partiellement, à l'aide d'au moins une chasse d'un gaz comprimé dans la cuve, son contenu vers un bol de mélange d'un dispositif de traitement des semences où le mélange est mis en contact avec les semences et dans lequel la dispersion est mélangée aux semences avant que la viscosité du mélange n'atteigne une valeur maximum.

2. Procédé selon la revendication 1, le volume du mélange dans la cuve étant inférieur ou égal à 151, mieux à 101.

3. Procédé selon l'une quelconque des revendications précédentes, la première chasse étant opérée au plus tard 60s après la fin de l'introduction de la substance pulvérulente dans la cuve, mieux au plus tard 30 s après celle-ci et la dernière chasse étant opérée le cas échéant au plus tard 30 min après la fin de l'introduction de la substance pulvérulente dans la cuve, mieux au plus tard 15 min après celle-ci, encore mieux au plus tard 5 min après celle-ci et encore mieux au plus tard 75s après celle-ci, voire au plus tard 60s après celle-ci.

4. Procédé selon l'une quelconque des revendications précédentes, l'injection de la substance pulvérulente dans la cuve s'effectuant à travers un piquage de diamètre intérieur compris entre 3 et 17 mm, mieux compris entre 5 et 15 mm.

5. Procédé selon la revendication précédente, le mélange étant soumis à une agitation selon un régime plus faible, typiquement d'un facteur 0,05 à 0,9, voire nul, au moment de la vidange au moins partielle, par rapport à la séquence allant du début de l'introduction de la substance pulvérulente au début de la vidange.

6. Procédé selon l'une quelconque des revendications précédentes, le niveau minimum de dépression dans la cuve juste avant l'aspiration de la substance pulvérulente étant compris entre -0,05 et -1 bar, notamment entre -0,1 et -0,8 bar, mieux entre -0,3 et -0,5 bar.

7. Procédé selon la revendication précédente, le niveau minimum de dépression étant maintenu dans la cuve pendant toute la durée de l'injection de la substance pulvérulente.

8. Procédé selon l'une quelconque des revendications précédentes, le niveau de surpression dans la cuve pendant l'opération de vidange au moins partielle étant compris entre 0,05 et 2 bar, notamment entre 0,1 bar et 1 bar.

9. Procédé selon l'une quelconque des revendications précédentes, l'évacuation du contenu de la cuve étant opérée au plus tard 5 min après la fin de l'introduction de la substance pulvérulente dans la cuve, mieux au plus tard 75s après celle-ci.

10. Procédé selon l'une quelconque des revendications précédentes, l'hydratation résultant de l'application du contenu de la cuve sur les semences étant suffisamment faible pour que les semences traitées ne puissent ni s'agglomérer, ni germer pendant leur stockage.

11. Installation de préparation d'une composition de traitement de semences, pour la mise en œuvre du procédé selon l'une quelconque des revendications précédentes, comportant au moins une cuve comportant :
∘ au moins un piquage (15) situé sous le niveau du milieu aqueux dans la cuve, le cas échéant en tenant compte du vortex d'agitation du milieu aqueux, et relié à une arrivée de substance pulvérulente, le piquage étant de diamètre intérieur inférieur ou égal à 17 mm
∘ un ou plusieurs piquages (11-14) reliés à
- une canalisation d'alimentation en eau de la cuve, cette canalisation comportant elle-même un ou plusieurs piquages permettant une injection dans celle-ci d'actif(s),
- un évent (55),
- une source de vide (59),
- une source d'air comprimé (57), et
o une sortie de vidange (126) de la cuve vers un dispositif de traitement où le mélange est mis en contact avec les semences à traiter,
la source d'air comprimé (57) étant configurée pour permettre une chasse d'air comprimé dans la cuve pour vider le contenu de la cuve par la sortie de vidange.

12. Installation selon la revendication 11, comportant une tête de lavage (24) dans la cuve, reliée à la canalisation d'alimentation en eau de la cuve par l'intermédiaire d'une dérivation.

13. Installation selon l'une des revendications 11 ou 12, la cuve ayant une contenance inférieure ou égale à 50 l, mieux à 20 l, encore mieux à 10 1, et une contenance supérieure ou égale à 0,1 l, mieux à 0,5 l, encore mieux à 1 l.

14. Installation selon l'une quelconque des revendications 11 à 13, comportant un automate de commande d' électrovannes, de moteurs et/ou de pompes permettant de commander de façon cyclique le remplissage, incluant le dosage, de la cuve en liquide, le dosage puis l'injection de la substance pulvérulente dans la cuve, la vidange de la cuve et l'agitation dans celle-ci.

## Patentansprüche

1. Verfahren zur Behandlung von Saatgut unter Verwendung einer Zusammensetzung, die als Mischung aus mindestens einer pulverförmigen Substanz und einem wässrigen Medium unmittelbar vor Gebrauch hergestellt wird, umfassend die Schritte:
∘ automatisches und zyklisches Mischen in mindestens einem ersten Behälter (10; 10'), wobei zunächst mindestens ein Teil des wässrigen Mediums und anschließend die pulverförmige Substanz eingeführt werden, wobei letztere durch eine im Behälter erzeugte Unterdrucksituation in das wässrige Medium angesaugt wird, die Einspritzung der pulverförmigen Substanz in den Behälter durch eine unter dem Niveau des wässrigen Mediums im Behälter befindliche Einspritzstelle, gegebenenfalls unter Berücksichtigung des Rührvortex des wässrigen Mediums, und verbunden mit einem Eingang für die pulverförmige Substanz erfolgt, wobei die Einspritzstelle einen Innendurchmesser von höchstens 17 mm aufweist, die pulverförmige Substanz eine hydratierbare Verbindung ist, wobei die hydratierbare Verbindung aus den folgenden Verbindungen ausgewählt wird: eine Cellulose oder ein Derivat davon, wie z.B. Hydroxycellulose, Alkylcellulose wie Methylcellulose, Hydroxyalkylcellulose wie Hydroxyethylcellulose oder Hydroxypropylcellulose, Hydroxypropylmethylcellulose, Carboxyalkylcellulose wie Carboxymethylhydroxyethylcellulose, Natriumcarboxymethylcellulose, synthetische Polymere wie Polyvinylpyridin, Polyvinylpyrrolidon, Polyethylenglykol, Polyethylenoxid, Polyamid, Polyacrylamid, Polymethacrylsäure, Polyvinylalkohol, Polyglycerin, Polytetrahydrofuran, Polyacrylsäure, Polyacrylat, Alginsäure und ihre Derivate wie Alginat, Pektin, Galactomannanen und ihre Derivate wie Guarkernmehl, hydroxypropylierte Guarkernmehl, Carboxymethyl-Guar, Carboxymethylhydroxypropyl-Guar, kationische Guars, Gelatine, Stärke und ihre Derivate, wie kationische Stärke, Maisstärke, Weizenstärke, Reisstärke, Kartoffelstärke, Tapioka, Wachsmais, Sorghum, Wachsorghum, Dextrin, Chitin, Chitosan, Xanthan, Carrageen, Karayagummi, ein Derivat einer der vorgenannten Verbindungen oder eine Kombination dieser Verbindungen, wobei die hydratierbare Verbindung im verwendeten Gemisch zur Behandlung von Saatgut in einer Konzentration von 4,5 bis 70 Gewichtsprozent vorliegt,
∘ wobei das mindestens teilweise Entleeren des Behälterinhalts mittels eines oder mehrerer Druckluftstöße in den Behälter zu einem Mischtopf einer Saatgutbehandlungsanlage erfolgt, in dem das Gemisch mit dem Saatgut in Kontakt gebracht wird und in dem die Dispersion mit dem Saatgut vermischt wird, bevor die Viskosität des Gemischs einen Höchstwert erreicht.

2. Verfahren nach Anspruch 1, wobei das Volumen des Gemischs im Behälter höchstens 15 l, vorzugsweise höchstens 10 l beträgt.

3. Verfahren nach einem der vorhergehenden Ansprüche, wobei der erste Druckluftstoß spätestens 60 s nach dem Ende der Einführung der pulverförmigen Substanz in den Behälter erfolgt, vorzugsweise spätestens 30 s danach, und der letzte Druckluftstoß, falls erforderlich, spätestens 30 min nach dem Ende der Einführung der pulverförmigen Substanz in den Behälter, vorzugsweise spätestens 15 min danach, noch vorzugsweise spätestens 5 min danach, noch vorzugsweise spätestens 75 s danach, oder sogar spätestens 60 s danach.

4. Verfahren nach einem der vorhergehenden Ansprüche, wobei die Einspritzung der pulverförmigen Substanz in den Behälter durch eine Einspritzstelle mit einem Innendurchmesser von 3 bis 17 mm, vorzugsweise von 5 bis 15 mm, erfolgt.

5. Verfahren nach dem vorhergehenden Anspruch, wobei die Mischung zu einem geringeren Rührregime, typischerweise Faktor 0,05 bis 0,9 oder sogar stillgelegt, bei der mindestens teilweisen Entleerung im Vergleich zur Sequenz vom Beginn der Einführung der pulverförmigen Substanz bis zum Beginn der Entleerung ausgesetzt wird.

6. Verfahren nach einem der vorhergehenden Ansprüche, wobei das Minimum des Unterdrucks im Behälter unmittelbar vor der Ansaugung der pulverförmigen Substanz zwischen -0,05 und -1 bar, insbesondere zwischen - 0,1 und -0,8 bar, vorzugsweise zwischen -0,3 und -0,5 bar liegt.

7. Verfahren nach dem vorhergehenden Anspruch, wobei der Unterdruck auf dem Minimum während der gesamten Einspritzung der pulverförmigen Substanz im Behälter gehalten wird.

8. Verfahren nach einem der vorhergehenden Ansprüche, wobei der Überdruck im Behälter während der mindestens teilweisen Entleerung zwischen 0,05 und 2 bar, insbesondere zwischen 0,1 bar und 1 bar beträgt.

9. Verfahren nach einem der vorhergehenden Ansprüche, wobei das Entleeren des Behälterinhalts spätestens 5 min nach dem Ende der Einführung der pulverförmigen Substanz in den Behälter, vorzugsweise spätestens 75 s danach erfolgt.

10. Verfahren nach einem der vorhergehenden Ansprüche, wobei die Hydratation infolge der Anwendung des Behälterinhalts auf die Samen so gering ist, dass die behandelten Samen weder verklumpen noch während der Lagerung keimen können.

11. Anlage zur Herstellung einer Zusammensetzung zur Saatgutbehandlung zur Durchführung des Verfahrens nach einem der vorhergehenden Ansprüche, umfassend mindestens einen Behälter mit:
• mindestens einer unter dem Niveau des wässrigen Mediums im Behälter befindlichen Einspritzstelle, gegebenenfalls unter Berücksichtigung des Rührvortex des wässrigen Mediums, und verbunden mit einem Eingang für die pulverförmige Substanz, wobei die Einspritzstelle einen Innendurchmesser von höchstens 17 mm aufweist,
• einem oder mehreren Einspritzstellen (11-14), die verbunden sind mit
∘ einem Wasserzufuhrrohr des Behälters, das selbst eine oder mehrere Einspritzstellen zur Injektion von Wirkstoffen aufweist,
∘ einem Entlüftungsventil (55),
∘ einer Vakuumquelle (59),
∘ einer Druckluftquelle (57), und
• einem Entleerungsauslass (126) des Behälters zu einer
Behandlungsvorrichtung, in der das Gemisch mit den zu behandelnden Samen in Kontakt gebracht wird, wobei die Druckluftquelle (57) so konfiguriert ist, dass sie Druckluft in den Behälter bläst, um den Behälterinhalt durch den Entleerungsauslass zu entleeren.

12. Anlage nach Anspruch 11, umfassend einen Reinigungskopf (24) im Behälter, der über eine Abzweigung mit dem Wasserzufuhrrohr des Behälters verbunden ist.

13. Anlage nach einem der Ansprüche 11 oder 12, wobei der Behälter eine Kapazität von höchstens 50 l, vorzugsweise 20 l, noch vorzugsweise 10 l, und mindestens 0,1 l, vorzugsweise 0,5 l, noch vorzugsweise 1 l aufweist.

14. Anlage nach einem der Ansprüche 11 bis 13, umfassend eine Steuereinheit zum zyklischen Steuern der elektromagnetischen Ventile, Motoren und/oder Pumpen, die das Befüllen des Behälters mit Flüssigkeit einschließlich Dosierung, das Dosieren und Injizieren der pulverförmigen Substanz in den Behälter, die Entleerung des Behälters und das Rühren darin steuert.

## Claims

1. A method for treating seeds, using a composition obtained extemporaneously by mixing at least one powdered substance and an aqueous medium, comprising the following steps:
- automatically and cyclically mixing in at least one first tank (10; 10') by first introducing at least part of the aqueous medium and then the powdered substance, the latter being sucked into the aqueous medium within the tank due to a vacuum created in the tank, the injection of the powdered substance into the tank being carried out through a tapping point located below the level of the aqueous medium in the tank, if necessary taking into account the vortex of agitation of the aqueous medium, and connected to an inlet for the powdered substance, the tapping point having an internal diameter less than or equal to 17 mm, the powdered substance being a hydratable compound, the hydratable compound being chosen from the following compounds: a cellulose or one derivatives thereof, for example hydroxycellulose, alkylcellulose, such as methylcellulose, hydroxyalkylcellulose such as hydroxyethylcellulose, or hydroxypropylcellulose, hydroxypropylmethylcellulose, carboxyalkylcellulose, such as carboxymethylhydroxyethylcellulose, sodium carboxymethylcellulose, synthetic polymers such as polyvinylpyridine, polyvinylpyrrolidone, polyethylene glycol, polyethylene oxide, polyamide, polyacrylamide, polymethacrylic acid, polyvinyl alcohol, polyglycerol, polytetrahydrofuran, polyacrylic acid, polyacrylate, alginic acid and derivatives thereof, such as alginate, pectin, galactomannans and derivatives thereof, such as guar gum, hydroxypropylated guar gum, carboxymethyl-guar, carboxymethylhydroxypropyl-guar, cationic guars, gelatin, starch and derivatives thereof, such as cationic starch, corn starch, wheat starch, rice starch, potato starch, tapioca, waxy corn, sorghum, waxy sorghum, dextrin, chitin, chitosan, xanthan gum, carrageenan gum, karaya gum, a derivative of any of the aforementioned compounds, or a combination of these compounds, the hydratable compound being present in the mixture used to treat the seeds at a concentration between 4.5 and 70% by weight,
- at least partially draining, using at least one flushing with compressed gas, its content towards a mixing bowl of a seed treatment device where the mixture is brought into contact with the seeds and in which the dispersion is mixed with the seeds before the viscosity of the mixture reaches a maximum value.

2. Method according to Claim 1, the volume of the mixture in the tank being less than or equal to 151, preferably 10l.

3. Method according to any of preceding claims, the first flushing being carried out at the latest 60s after the end of the introduction of the powdered substance into the tank, preferably at the latest 30s after it, and the last flushing taking place, if applicable, at the latest 30 min after the end of the introduction of the powdered substance into the tank, preferably at the latest 15 min after it, further preferably at the latest 5 min after it, even further preferably at the latest 75s after it, even at the latest 60s after it.

4. Method according to any of preceding claims, the injection of the powdered substance into the tank being carried out through a tapping point with an internal diameter between 3 and 17 mm, preferably between 5 and 15 mm.

5. Method according to the preceding claim, the mixture being subjected to agitation at a lower rate, typically a factor of 0.05 to 0.9, or even nil, at the time of the at least partial draining, compared to the sequence from the beginning of the introduction of the powdered substance to the start of the draining.

6. Method according to any of preceding claims, the minimum level of vacuum in the tank just before the aspiration of the powdered substance being between -0.05 and -1 bar, particularly between -0.1 and -0.8 bar, preferably between -0.3 and -0.5 bar.

7. Method according to any of preceding claims, the minimum level of vacuum being maintained in the tank throughout the entire duration of the injection of the powdered substance.

8. Method according to any of preceding claims, the level of overpressure in the tank during the at least partial draining operation being between 0.05 and 2 bar, particularly between 0.1 and 1 bar.

9. Method according to any of preceding claims, the evacuation of the tank content being performed at the latest 5 min after the end of the introduction of the powdered substance into the tank, preferably at the latest 75s after it.

10. Method according to any of preceding claims, the hydration resulting from the application of the tank content to the seeds being sufficiently low so that the treated seeds do not clump together, nor germinate during storage.

11. Installation for the preparation of a seed treatment composition, for the implementation of the method according to any of preceding claims, comprising at least one tank comprising:
∘ at least one tapping point (15) located below the level of the aqueous medium in the tank, if necessary taking into account the vortex of agitation of the aqueous medium, and connected to an inlet for the powdered substance, the tapping point having an internal diameter less than or equal to 17 mm,
∘ one or more tapping points (11-14) connected to:
▪ a water supply pipe of the tank, this pipe having one or more tapping points allowing the injection of active ingredient(s) into it,
▪ a vent (55),
▪ a vacuum source (59),
▪ a compressed air source (57), and
∘ a draining outlet (126) of the tank towards a treatment device where the mixture is brought into contact with the seeds to be treated,
the compressed air source (57) being configured to allow a compressed air flush in the tank to empty the content of the tank through the draining outlet.

12. Installation according to Claim 11, comprising a washing head (24) in the tank, connected to the water supply pipe of the tank via a bypass.

13. Installation according to any of Claims 11 or 12, the tank having a capacity less than or equal to 501, preferably 201, further preferably 101, and a capacity greater than or equal to 0.11, preferably 0.51, further preferably 11.

14. Installation according to any of Claims 11 to 13, comprising a control device for solenoid valves, motors and/or pumps allowing the cyclic control of filling, including dosing, the tank with liquid, dosing and then injecting the powdered substance into the tank, draining the tank, and agitating within it.
